# EUROPEAN PATENT APPLICATION

(11) **EP 1 694 064 A1**
(43) Date of publication of application: **23.08.2006**
(21) Application number: 06250796.7
(22) Date of filing: 15.02.2006
(51) Int. Cl.: H04N 5/64

(54) **Flat screen display mounting system**

(30) Priority: 18.02.2005 GB 0503447
(71) Applicant: Whittome, Dominic, London W12 7HE (GB)
(72) Inventor: Whittome, Dominic, London W12 7HE (GB)
(74) Representative: Wilson, Peter

(57) **Abstract**

A mounting apparatus that operates by hiding a wide-screen FSD behind a decorative feature, aesthetically and effectively, which enables the FSD to be revealed and in a lower position above floor level which makes for an easier and more ergonomic viewing angle and helps avoid 'craned neck' amongst other spinal complaints associated with prolonged viewing at awkward angles - typically the case when a FSD is positioned too high up.

## Description

This invention relates to a flat screen display mounting apparatus for camouflaging unsightly flat screen displays (FSD) such as they are used in a television set, computer or home entertainment system, that can be mounted up on a wall or at a high level above the floor.

Display screens for the likes of television sets, computers and like home entertainment systems have undergone considerable changes in recent years. For many years, the predominant technology for such screens has been cathode ray tube technology. Such technology is well established, and widely used. However, it necessarily means that a display apparatus extends considerably into a third dimension perpendicular to and generally behind the screen area. A cathode ray tube apparatus requires considerable depth, particularly where the screen area is large.

In recent years, a number of alternative technologies for display screens which offer a much reduced profile in this third dimension have been developed. These include display screens making use of rear projection technology, liquid crystal displays, and plasma screens. Such screens are now in relatively wide spread domestic use, particularly as television display screens, and also as combination display screens including other home computing/home entertainment applications.

The low depth profile aspect ratio of such screens has led them to be come to be known as "flat screen displays" (FSD). The low depth profile conveys particular advantages in a room environment, such as domestic environment. Since only limited depth in a third dimension is required for flat screen displays, the FSD can be located against a wall with a much reduced floor foot print offering a significant space saving. Indeed, there is even the possibility of mounting the FSD on the wall itself, or otherwise supporting the FSD at a high level above the floor, to free up significant space within the room.

Perceived disadvantages of such an arrangement include that a wall mounted or otherwise high level mounted FSD might be considered unsightly when not in use, and that a high viewing position is not necessarily comfortable or ergonomically desirable for people to watch when seated in the room.

It is an object of the invention to provide a flat screen display mounting apparatus, a framework for such a mounting apparatus, and a mounting method, which provide enhanced functionality and mitigate some or all of the above disadvantages.

Thus, in accordance with the invention in a first aspect there is provided a flat screen display mounting apparatus comprising a flat screen display (FSD) and a decorative object (decoration), wherein a rear face of the FSD and a rear face of the decoration are connected in a back-to-back configuration to establish a chassis, which chassis is movable from a first upper position at which the FSD can be at least partly hidden from view behind the decorative object to a second lower position at which the FSD is revealed.

The FSD set can thus be hidden from view behind a decorative object (decoration), such as a mirror or a painting, so that the FSD can be revealed at a lower height above the floor level and thus be easier and ergonomically safer for people to watch.

The rear-side of the FSD and the rear-side of the decoration are connected in a back-to-back configuration and establish a chassis. This chassis can be moved or rotated downwards in order to reveal the FSD in its new, lower position.

It will be understood that as used hereinabove, reference to the rear face of the FSD is to the rear planar surface oppositely located from the viewable screen. Likewise, reference to the rear face of the decorative object is a reference to the rear face of the decoration generally not intended to be visible, for example the back of a painting, the back face of a mirror etc.

In order to obscure the screen of the FSD with the apparatus in the first upper position, the decorative object or decoration should preferably be at least generally coextensive with the FSD area, or extend across a greater area, so as to entirely obscure it in the camouflaged position.

In use, the chassis is moved from a first position whereat the FSD screen is at least partly obscured behind the decorative object and the decorative object is displayed to a second position where the FSD screen itself is displayed for viewing. The chassis is provided with wall mounting means to enable the chassis to be mounted on a vertical wall surface and/or on a stand in a generally vertical position against a wall at a high level above the floor, which mounting means are adapted to allow the chassis so mounted to be moveable between the said first and second positions.

In particular, the mounting means include a pivot allowing the chassis to be rotated about a generally horizontal axis between a first position where it is disposed generally vertically above the pivot axis in such an orientation that the decorative object is presented outwardly from the wall and a second position where the chassis is positioned generally vertically below the pivot axis and the FSD is presented generally outwardly away from the wall.

Thus, with the chassis in the up position the FSD is hidden and the FSD's screen faces into-the-wall whereas the decoration is on show, facing into-the-room. The FSD's screen can be revealed by moving the chassis for example by rotating it approximately 180° into the down position so the decoration is then facing into-the-wall and FSD's screen faces into-the-room and at a lower and suitable height from an ergonomic perspective for ease of viewing.

The transmitted image as it appears on the FSD's screen must be the right way up when the FSD is revealed in the down position so the FSD must either be positioned upside down when its rear-side is connected back-to-back with the rear-side of the decoration; or else the transmitted image beamed on the screen must be inverted e.g. electronically to ensure the transmitted image is the right way up for people to view.

With the chassis in its down position, at a lower level above the floor, the FSD is viewable at a more ergonomic angle for people to watch and they will not have to tilt their heads up so high or at an angle that risks straining or craning their necks or damaging their spines. The FSD can thus be viewed with greater comfort and safety.

With the chassis in its up position at a higher level above the floor, the FSD is hidden and the decoration is on show at a sensible/suitable height above the floor i.e. roughly the height at which one would normally expect to see paintings or other decorative objects displayed on the wall. For the decoration to be displayed at a sensible height above floor level it must normally be in sync i.e. lying in roughly the same horizontal plane as adjacent wall decorations.

The invention should solve two problems therefore: by providing convincing and effective camouflage for an unsightly FSD that would otherwise dominate a living room or drawing room if it were permanently on show and also by providing for the FSD to be revealed at a lower and safer height above the floor for easier and ergonomic viewing.

In accordance with the invention, a chassis is formed by joining the rear side of the FSD back-to-back with the rear side of the decoration so that when the chassis combination is in position against a wall, for example mounted thereon or on a stand in the vicinity thereof, either the front face of the decoration or the front face of the display is visible, with the other against the wall. The chassis incorporates mounting means allowing the overall assembly to be moved between the two positions at which one or other is visible.

The FSD and decoration may be mounted together by any suitable mounting structure which includes the necessary means to mount an FSD and a decoration in back-to-back configuration. For example, in one embodiment, a mutual fixing or mounting plate is provided adapted in use to lie between a decoration mounted on a first side thereof and a FSD mounted on a second side thereof. In those circumstances, the wall mounting means about which the assembled chassis is moveable might depend directly from, and in the particular embodiment might pivot directly with, such a mounting plate. In an alternative embodiment, the wall mounting means may depend from, and in the particular embodiment pivot with, the decoration or a frame or support therefor,

The FSD is for example a tv set. The FSD is for example a rear projecting LCD or plasma screen.

In accordance with the invention in a further aspect, a flat screen display mounting apparatus framework is provided suitable for the creation of a flat screen display mounting apparatus as above described. That is to say, a framework is provided onto which can be mounted a flat screen display and a decoration in back-to-back configuration as above described to form a chassis by means of which the FSD can be hidden from view behind the decorative object and revealed as desired in the manner above described.

In accordance with this aspect of the invention, a flat screen display mounting framework comprises a generally planar framework support with a first display mounting means adapted to mount a flat screen display, and a second decoration mounting means adapted to mount a decoration, the said first and second mounting means being so disposed that in use the flat screen display and decoration are connected in a back-to-back manner to establish a chassis; and wall mounting means depending from the chassis and allowing the chassis to be mounted upon a wall so as to be movable from a first position at which the FSD can be at least partly hidden from view behind the decorative object to a second lower position at which the FSD is revealed.

In particular, the wall mounting means includes a pivot allowing the chassis assembly to be pivoted about a generally horizontal axis in the manner above described.

In accordance with a further aspect of the invention there is provided a method of mounting a flat screen display in such a manner as to allow the display to be hidden from view behind a decorative object in a first mounted position and revealed at a lower height in a second mounted position, the method comprising: mounting a rear side of the flat screen display and a rear side of a decoration in a back-to-back consideration to establish a chassis, for example by connecting the same on suitable mounting means such as a mounting plate; mounting the chassis on a wall or a supporting stand otherwise raising it to a level above the floor, via mounting means enabling it to be moved between a first position at which the FSD can be at least partly hidden from view behind the decorative object to a second lower position at which the FSD is revealed.

In particular, the wall mounting means comprise a generally horizontal pivot about which the chassis can be pivoted from a first upper position to a second lower position in the manner above described. Other preferred features of the method will be understood by analogy.

The invention will now be described by way of examples and with reference to accompanying drawings.

Two configuration examples for the chassis (9) are described below.

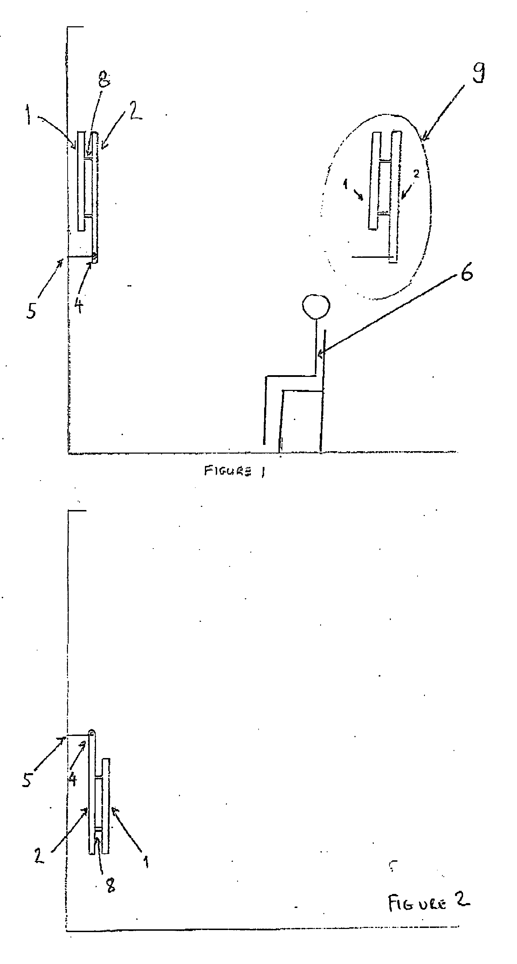

Figure 1 and Figure 2 concern the first configuration example. The FSD (1) and the decoration (2) can be inter-connected directly by pins or other means (8). The chassis is established by directly attaching the rear-side of the FSD to the rear-side of the decoration in a back-to-back configuration. The chassis (9) that is now established can be attached at a pivot or point (4) which is securely attached to the wall (5) by conventional means. The point itself - about which the chassis would translate, move or rotate - can be concealed from view by being positioned behind the decoration as shown.

Figure 1 shows the chassis in the up position so the FSD is hidden and the decoration is on show. Figure 2 shows the chassis into the down position to reveal the FSD at a sensible height for an ergonomically safe viewing angle for the FSD viewer (6).

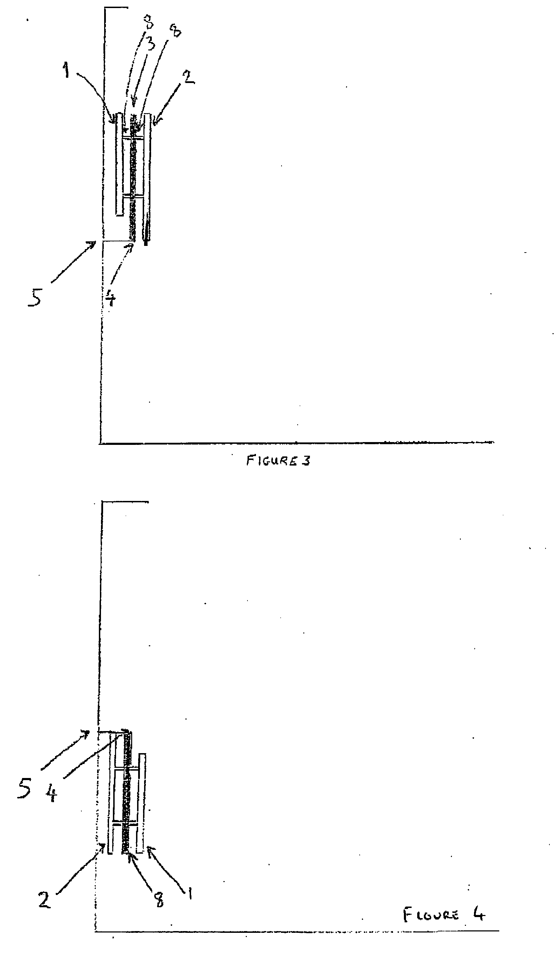

Figures 3 and Figure 4 concern a second configuration example. The rear-side of the FSD and the rear-side of the decoration are connected indirectly via a mutual fixing plate (3) to which the FSD and decoration could each be securely attached. The chassis established will then consist of the FSD, the decoration and the mutual fixing plate in between. The chassis or bottom end of the mutual fixing plate is then pivoted at point (4).

Figure 3 shows the chassis in the up position where the FSD is hidden and the decoration is on show. Figure 4 shows the chassis in the down position to reveal the FSD at a sensible height for an ergonomically safe viewing angle for the FSD viewer.

## Claims

1. A flat screen display (FSD) mounting apparatus comprising a flat screen display (FSD) and a decorative object (decoration), wherein a rear face of the FSD and a rear face of the decoration are connected in a back-to-back configuration to establish a chassis, which chassis is movable from a first upper position at which the FSD can be at least partly hidden from view behind the decorative object to a second lower position at which the FSD is revealed.

2. A mounting apparatus as claimed in claim 1 wherein the chassis is provided with wall mounting means to enable the chassis to be mounted on a vertical wall surface and/or on a stand in a generally vertical position against a wall at a high level above the floor, which mounting means are adapted to allow the chassis so mounted to be moveable between the said first and second positions.

3. A mounting apparatus as claimed in claim 1 or 2 wherein the mounting means include a pivot allowing the chassis to be rotated about a generally horizontal axis between a first position where it is disposed generally vertically above the pivot axis in such an orientation that the decorative object is presented outwardly from the wall and a second position where the chassis is positioned generally vertically below the pivot axis and the FSD is presented generally outwardly away from the wall.

4. A mounting apparatus as claimed in claim 3 that is securely fixed into a wall at a pivot about which the chassis can move or flip down or rotate - as if rotated 180° downwards - from its first position to its send position in order to reveal the TV hidden behind the decoration and can then return to its up position.

5. A mounting apparatus as claimed in any preceding claim wherein the rear-side of the FSD connects indirectly with the rear of the decoration by means of a mutual fixing plate in between to which the FSD and the decoration are attached respectively on a first and second side thereof.

6. A mounting apparatus as claimed in any out of the preceding claims where FSD takes the form of a television set.

7. A flat screen display mounting framework suitable for the creation of a flat screen display mounting as claimed in any preceding claim, in that, a framework is provided onto which can be mounted a flat screen display and a decoration in back-to-back configuration to form a chassis by means of which the FSD can be hidden from view behind the decorative object and revealed as desired in the manner of any preceding claim.

8. A flat screen display mounting framework as claimed in claim 7 comprising a generally planar framework support with a first display mounting means adapted to mount a flat screen display, and a second decoration mounting means adapted to mount a decoration, the said first and second mounting means being so disposed that in use the flat screen display and decoration are connected in a back-to-back manner to establish a chassis; and wall mounting means depending from the chassis and allowing the chassis to be mounted upon a wall so as to be movable from a first position at which the FSD can be at least partly hidden from view behind the decorative object to a second lower position at which the FSD is revealed.

9. A method of mounting a flat screen display in such a manner as to allow the display to be hidden from view behind a decorative object in a first mounted position and revealed at a lower height in a second mounted position, the method comprising: mounting a rear side of the flat screen display and a rear side of a decoration in a back-to-back consideration to establish a chassis, mounting the chassis on a wall or a supporting stand otherwise raising it to a level above the floor, via mounting means enabling it to be moved between a first position at which the FSD can be at least partly hidden from view behind the decorative object and a second lower position at which the FSD is revealed.
